# EUROPÄISCHE PATENTSCHRIFT

(11) **EP 0 834 721 B1**
(45) Veröffentlichungstag und Bekanntmachung des Hinweises auf die Patenterteilung: **15.08.2007**
(21) Anmeldenummer: 97117076.6
(22) Anmeldetag: 01.10.1997
(51) Int. Cl.: G01F 1/06, G01F 1/075

(54) **Durchflusssensor**
Flow sensor
Débitmètre

(30) Priorität: 04.10.1996 DE 29617294 U
(43) Veröffentlichungstag der Anmeldung: 08.04.1998
(73) Patentinhaber: Bürkert Werke GmbH & Co., D-74653 Ingelfingen (DE)
(72) Erfinder: Frantz, Bernard, 67210 Obernai (FR); Beck, Michel, 67120 Ernolsheim sur Bruche (FR)
(74) Vertreter: Kitzhofer, Thomas

(56) Entgegenhaltungen:
- CH-A- 367 637
- US-A- 4 656 873
- US-A- 4 936 151
- US-A- 5 182 952
- US-A- 5 483 840

## Beschreibung

Die Erfindung betrifft ein Durchflußsensormodulsystem, das Rohrleitungen mit unterschiedlichen Innendurchmessern vorsieht, die mit zugeordneten Durchflußsensoren ausgestattet sind.

Bei bislang üblichen Durchflußsensoren wird das mit einem Permanentmagneten versehene Schaufelrad am Ende eines langen, rohrförmigen Sensorfingers gelagert. Im Inneren des Sensorfingers ist ein Meßwertaufnehmer, üblicherweise in Form einer Spule, angeordnet, der bei Rotation des Schaufelrades proportional zur Durchflußgeschwindigkeit elektrische Meßsignale erzeugt. Zur Lagerung des langen Sensorfingers ist ein separates T-förmiges Rohranschlußstück, das in die Rohrleitung eingebaut werden muß, vorgesehen, wobei der senkrechte Abschnitt des T-förmigen Rohranschlußstücks als Aufnahme für den Sensorfinger dient. Der Durchflußsensor samt seines T-förmigen Anschlußstücks steht seitlich sehr weit von der Rohrleitung ab, so daß sich Platzprobleme ergeben können.

Aus der US 4 936 151 und der CH 367 637 sind Durchflubsensoren, die mit Schaufelrädern arbeiten, bekannt. Die US 4 936 151 lagert das Schaufelrad an einem abnehmbaren Deckel, der eine seitlich offene Rohrwandung schließt. Die CH 367 637 sieht ebenfalls einen seitlichen Deckel für eine offene Rohrwandung vor, wobei hier nur ein seitliches Lager des Schaufelrades im Deckel gelagert ist.

Die Erfindung verwendet sehr kompakte DurchfluBsensoren, die auch bei wenig zur Verfügung stehendem Raum in die Rohrleitung eingebaut werden können. Das modular aufgebaute System nach der Erfindung sieht vor, daß Rohre mit Abschnitten unterschiedlichen Durchmessers Durchflußsensoren beinhalten, welche auf gleich dimensionierten Deckeln gelagert sind - trotz der unterschiedlichen Rohrdurchmesser. Die verwendeten DurchfluBsensoren haben Schaufelräder in ihren zugeordneten, geraden Rohrabschnitten, in die sie integriert sind. Ein Teil der zugeordneten seitlichen Rohrwandung des Anschlußstücks ist als abnehmbarer Deckel ausgebildet, in dem das zugeordnete Schaufelrad wenigstens auf einer Seite gelagert ist, und der den Ausbau des Schaufelrads erlaubt. Bei diesen Durchflußsensoren ist kein langer Sensorfinger mehr erforderlich, der zur Lagerung des Schaufelrads dient. Damit baut der Durchflußsensor radial klein. Da das Schaufelrad ferner auch nicht mehr am Ende eines langen rohrförmigen Teiles gelagert ist, sondern unmittelbar in der Rohrwandung, kann die Lagerung auch nicht zum Schwingen neigen. Die Durchflußsensoren benötigen kein T-förmiges Rohranschlußstück, sondern sind Teil eines zugeordneten geraden Rohrabschnitts, bei dem zudem ein leichter Ausbau des Schaufelrads möglich ist.

Vorzugsweise ist an die Rohrwandung ein quaderförmiger, seitlich abstehender und hohler Fortsatz zur Aufnahme des Schaufelrads in seinem Inneren angeformt. Bei einer bevorzugten Ausführungsform ist die radial bezüglich der Rohrmittelachse nach außen weisende Seite des Fortsatzes als abnehmbarer Deckel ausgebildet, wobei von der Innenseite des Deckels zwei sich parallel zur Rohrmittelachse erstreckende, am Deckel angeformte Lagerflansche abstehen. Diese dienen zur Lagerung der Enden der Drehachse des sich zwischen ihnen erstreckenden Schaufelrads. Bei dieser Ausführungsform ist damit das Schaufelrad vollständig im Deckel gelagert, so daß durch Herausnahme des Deckels das komplette Schaufelrad entfernt wird.

Bei der zweiten bevorzugen Ausführungsform ist eine sich parallel zur Rohrmittelachse erstreckende Seitenwand des quaderförmigen Fortsatzes als abnehmbarer Deckel ausgebildet, in dem ein Ende der Drehachse des Schaufelrads gelagert ist, wobei das gegenüberliegende Ende der Drehachse in einer Ausnehmung auf der Innenseite der dem Deckel gegenüberliegenden Seitenwand aufgenommen ist. Bei dieser Ausführungsform dient der Deckel nur zur einseitigen Lagerung des Schaufelrads.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Fig. 1 eine Seitenansicht einer ersten Ausführungsform des Durchflußsensors des erfindungsgemäßen Durchflußsensormodulsystems, bei dem das Schaufelrad in einem nach oben abnehmbaren Deckel gelagert ist,
- Fig. 2 eine Vorderansicht, teilweise im Schnitt, des Durchflußsensors nach Fig. 1,
- Fig. 3 eine vergrößerte Ansicht des mit X bezeichneten Bereichs in Fig. 2,
- Fig. 4 einen Durchflußsensor gemäß Fig. 2, bei dem der Rohrabschnitt jedoch einen kleinen Innendurchmesser hat,
- Fig. 5 einen Durchflußsensor gemäß Fig. 2, bei dem der Rohrabschnitt einen großen Innendurchmesser hat,
- Fig. 6 eine zweite Ausführungsform des Durchflußsensors des erfindungsgemäßen Durchflußsensormodulsystems, bei dem der Deckel seitlich abnehmbar ist und in dem nur ein Ende der Drehachse des Schaufelrads aufgenommen ist,
- Fig. 7 eine vergrößerte Ansicht des mit Y bezeichneten Bereichs in Fig. 6, und
- Fig. 8 einen Durchflußsensor gemäß Fig. 6, bei dem das Schaufelrad in einem Rohrabschnitt mit sehr kleinem Innendurchmesser integriert ist.

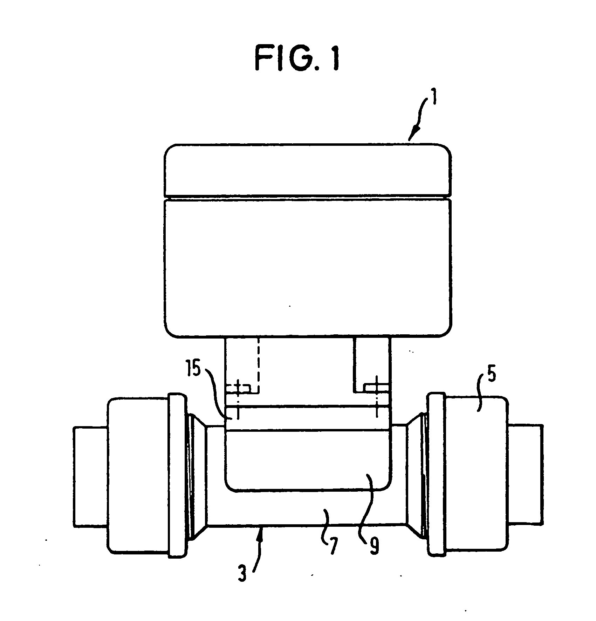

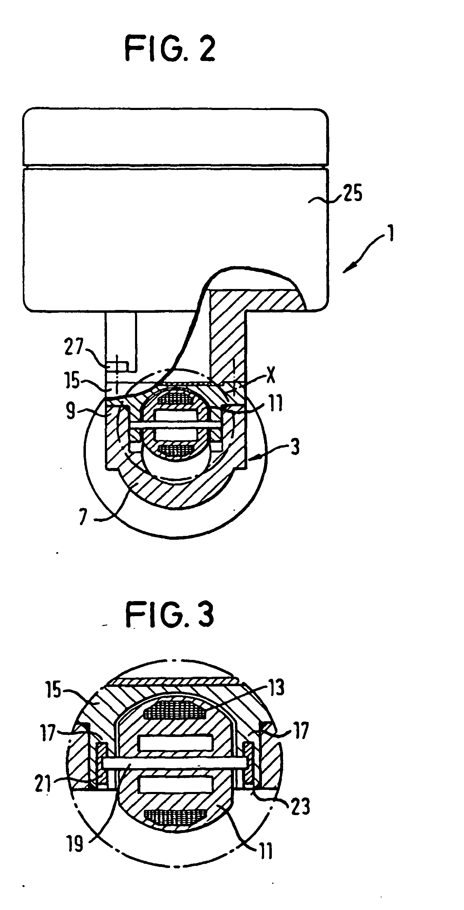

In Fig. 1 ist ein Durchflußsensor 1 gezeigt, der zur Messung der Strömung in einer nicht gezeigten Rohrleitung dient. Der Durchflußsensor 1 umfaßt einen geraden Rohrabschnitt 3, der fest in einer Rohrleitung eingebaut werden kann. Hierzu weist der Rohrabschnitt 3 an seinen seitlichen Enden entsprechende Befestigungseinrichtungen, wie z.B. Gewinde, Muffen, Flansche (jeweils nicht gezeigt) oder Überwurfmuttern auf, wobei letztere in Fig. 1 mit dem Bezugszeichen 5 versehen sind. Der Rohrabschnitt 3 umfaßt eine Rohrwandung 7, an die im Bereich zwischen den Überwurfmuttern 5 ein quaderförmiger, seitlich abstehender, hohler Fortsatz 9 angeformt ist. Im Inneren des Fortsatzes 9 ist, wie Fig. 2 zu entnehmen ist, ein Schaufelrad 11 angeordnet, dessen zur Rohrmittelachse weisende Schaufeln in die Strömung im Inneren des Rohrabschnitts 3 ragen.

In das Schaufelrad 11 ist ein Permanentmagnet 13 (vgl. Fig. 3) integriert. Die bezüglich der Rohrmittelachse nach außen weisende Seite des Fortsatzes 9 ist als nach oben abnehmbarer Deckel 15 ausgebildet, der an den Stirnflächen der Seitenwandungen des Fortsatzes 9 abdichtend anliegt. Von der Innenseite des Deckels 15 stehen zwei sich parallel zur Rohrmittelachse erstreckende, am Deckel 15 angeformte, ebene Lagerflansche 17 ab, zwischen denen sich das Schaufelrad 11 erstreckt. Die Enden der Drehachse 19 des Schaufelrads 11 sind in den Lagerflanschen 17 aufgenommen, wie Fig. 3 am deutlichsten zu entnehmen ist. Zur schnellen Auswechslung des Schaufelrads 11 sind dünne, plattenförmige Gleitlager 21 vorgesehen, die zusammen mit dem Schaufelrad 11 und der Drehachse 19 eine vormontierte Einheit bilden. Die Gleitlager 21 werden zum Montieren der Einheit in zugeordnete Längsschlitze (nicht gezeigt) in den Lagerflanschen 17 eingeschoben. Die Innenseite des Deckels 15 ist im Bereich zwischen den Lagerflanschen 17 der Form des Schaufelrads 11 angepaßt.

Damit die Drehachse 19 auch exakt rechtwinkelig zur Strömungsrichtung ausgerichtet ist, dienen die Lagerflansche 17 auch zur seitlichen Lagefixierung des Deckels 15 relativ zu der übrigen Rohrwandung 7. Hierzu liegt die Außenseite jedes Lagerflansches 17 an jeweils einer ebenen Paßfläche 23 der Rohrwandung 17 an. -

Der Deckel 15 ist ferner so dimensioniert, daß er nicht nur zur Lagerung des Schaufelrads 11 dient, sondern er ist so groß, daß durch sein Öffnen das Schaufelrad 11 zum Austausch aus dem Inneren des Rohrabschnitts 3 entfernt werden kann.

Auf der Oberseite des Deckels 15 ist ein Gehäuse 25 vorgesehen, in dessen Innerem ein Meßwertaufnehmer (nicht gezeigt) in Form eines Hall-Sensors angeordnet ist. Das Schaufelrad 11 ist gegenüber dem Inneren des Gehäuses 25 durch den Deckel 15 abgetrennt, wobei das Gehäuse 25 zusammen mit dem Deckel 15 über Schrauben 27 an der übrigen Rohrwandung 7 befestigt ist.

Der Hall-Sensor liefert auf die Rotation des Schaufelrads 11 durch die Strömung hin Meßwertsignale, deren Frequenz proportional zur Durchflußgeschwindigkeit ist, über die auch auf die Durchflußmenge geschlossen werden kann.

Der gezeigte Durchflußsensor 1 baut radial sehr klein. Das Auswechseln des Schaufelrads 11 oder dessen Säubern bei Verklemmung des Schaufelrads 11 erfolgt einfach durch Abnehmen des Deckels 15.

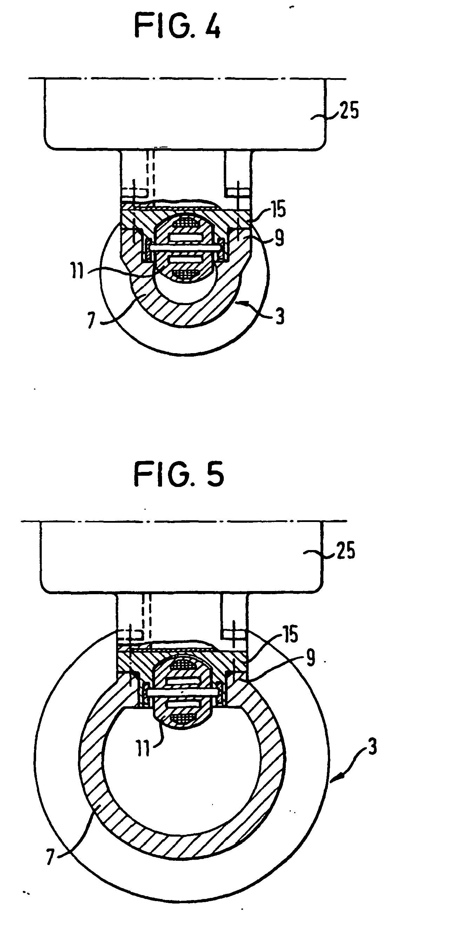

Die gezeigten Durchflußsensoren sind Teil eines Durchflußsensormodulsystems, da sie in Modulbauweise ausgebildet sind, wie den Fig. 4 und 5 zu entnehmen ist. Das Modulsystem hat Rohre mit Abschnitten 3, die unterschiedliche Innendurchmesser aufweisen, bei denen aber stets ein gleich dimensionierter Deckel 15 verwendet wird, an den die an den Deckel 15 anschließende Rohrwandung 7 angepaßt ist. Bei der in Fig. 4 gezeigten Ausführungsform, in der ein Rohrabschnitt 3 mit kleinem Innendurchmesser dargestellt ist, hat die Rohrwandung 7 nur in der unteren Hälfte eine kreiszylindrische Außenkontur, wogegen die Geometrie der oberen Hälfte durch den Fortsatz 9 bestimmt ist.

Im Gegensatz hierzu hat der in Fig. 5 gezeigte Rohrabschnitt 3 eine Rohrwandung 7 mit einer im wesentlichen kreiszylindrischen Außenkontur, die nur im Bereich ihres oberen Endes vom Fortsatz 9 unterbrochen ist.

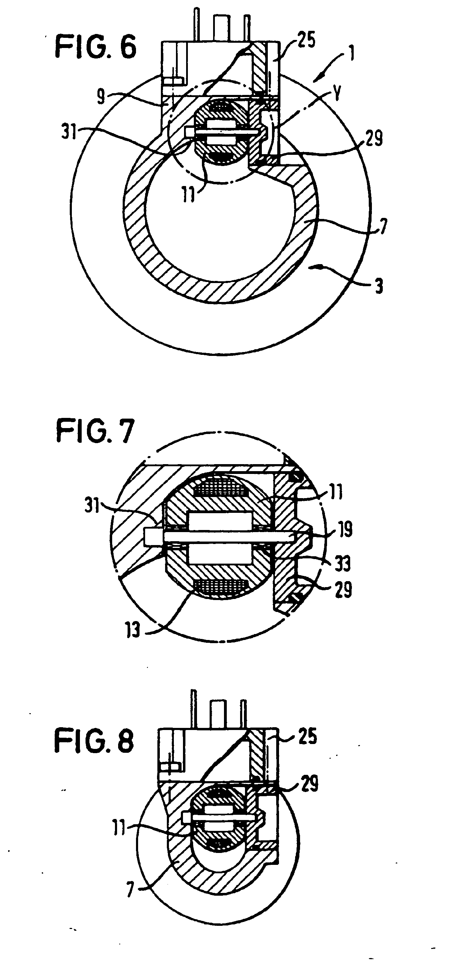

Die in Fig. 6 dargestellte Ausführungsform unterscheidet sich von den zuvor beschriebenen Ausführungsformen darin, daß nicht ein nach oben abnehmbarer Deckel 15, sondern ein seitlich abnehmbarer Deckel 29 vorgesehen ist. Der Deckel 29 bildet dadurch eine sich parallel zur Rohrachse erstreckende Seitenwand des quaderförmigen Fortsatzes 9. Im Gegensatz zum Deckel 15 ist im Deckel 29 nur die Lagerung für ein Ende der Drehachse 19 vorgesehen, deren gegenüberliegendes Ende in einer Ausnehmung auf der Innenseite der dem Deckel 29 gegenüberliegenden Seitenwand 31 aufgenommen ist. Durch das Abschrauben des Deckels 29 läßt sich auch bei dieser Ausführungsform, wie Fig. 7 deutlicher zu entnehmen ist, das Schaufelrad 11 aus dem Inneren des Rohrabschnitts 3 entfernen. Hierzu wird das Schaufelrad 11 mitsamt der Lagerbuchsen 33 von der Drehachse 19 abgezogen, die nach dem Abnehmen des Deckels 29 durchaus noch in der Ausnehmung in der Seitenwand 31 stecken kann, da die Drehachse 19 bei dieser Ausführungsform nicht mit dem Schaufelrad 11 mitläuft, sondern raumfest gelagert ist.

Auch bei der in den Fig. 6 bis 8 gezeigten Ausführungsform ist an der Oberseite des Fortsatzes 9 das Gehäuse 25 angeschraubt. Ferner kann der Durchflußsensor 1 auch bei dieser Ausführungsform in Modulbauweise zur Schaffung eines Durchsfluβsensormodulsystems ausgeführt sein, indem unabhängig vom Durchmesser des Rohrabschnitts stets ein gleich dimensionierter Deckel 29 samt gleich dimensioniertem Schaufelrad 11 vorgesehen ist. Im Gegensatz zu der in den Fig. 1 bis 5 gezeigten Ausführungsformen ist jedoch bei der in den Fig. 6 bis 8 gezeigten Ausführungsformen im Gehäuse 25 eine Spule (nicht gezeigt) angeordnet, die als Meßwertaufnehmer dient.

## Patentansprüche

1. Durchflußsensormodulsystem, mit geraden Rohrabschnitten (3), die unterschiedliche Innendurchmesser haben, und die jeweils einen zugeordneten Durchflußsensor zur Messung der Strömung in der zugeordneten Rohrleitung aufweisen, mit einem in die zugeordnete Strömung ragenden, durch sie in Rotation versetzbaren Schaufelrad (11), das ein elektrisches Meßsignal in einem Meßwertaufnehmer außerhalb der zugeordneten Rohrleitung erzeugt, wobei das Schaufelrad (11) in den zugeordneten geraden Rohrabschnitt (3) integriert ist und ein Teil der seitlichen Rohrwandung (7) des Rohrabschnitts (3) als abnehmbarer Deckel (15; 29) ausgebildet ist, in dem das Schaufelrad (11) wenigstens auf einer Seite gelagert ist, und der den Ausbau des Schaufelrads (11) erlaubt, wobei die Deckel (15; 29) der unterschiedliche Innendurchmesser aufweisenden. Rohrabschnitte gleich dimensioniert sind.

2. Durchflußsensormodulsystem nach Anspruch 1, **dadurch gekennzeichnet, daß** in das Schaufelrad (11) ein Permanentmagnet (13) integriert ist und daß auf der Außenseite der Rohrwandung (7) ein Gehäuse (25) angebracht ist, in dem der Meßwertaufnehmer in Form eines Hall- oder induktiven Sensors angeordnet ist.

3. Durchflußsensormodulsystem nach Anspruch 1 oder 2, **dadurch gekennzeichnet, daß** an der Rohrwandung (7) ein quaderförmiger, seitlich abstehender und hohler Fortsatz (9) zur Aufnahme des Schaufelrads (11) in seinem Inneren angeformt ist.

4. Durchflußsensormodulsystem nach den Ansprüchen 2 und 3, **dadurch gekennzeichnet, daß** das Innere des Fortsatzes (9) durch den Deckel (15) vom Gehäuse (25) abgetrennt ist.

5. Durchflußsensormodulsystem nach Anspruch 4, **dadurch gekennzeichnet, daß** die radial bezüglich der Rohrmittelachse nach außende weisende Seite des Fortsatzes (9) den abnehmbaren Deckel (15) bildet, wobei von der Innenseite des Deckels (15) zwei sich parallel zur Rohrmittelachse erstreckende, am Deckel (15) angeformte Lagerflansche (17) abstehen, zur Lagerung der Enden der Drehachse (19) des sich zwischen ihnen erstreckenden Schaufelrads (11).

6. Durchflußsensormodulsystem nach Anspruch 5, **dadurch gekennzeichnet, daß** das Schaufelrad (11) mit seiner Drehachse (19) und mit an deren Enden vorgesehenen Gleitlagern (21) eine vormontierte Einheit bildet, wobei zu deren Montieren die Gleitlager (21) in zugeordnete Längsschlitze in den Lagerflanschen (17) eingeführt werden.

7. Durchflußsensormodulsystem nach Anspruch 5 oder 6, **dadurch gekennzeichnet, daß** die Außenseite jedes Lagerflansches (17) an jeweils einer ebenen Paßfläche (23) der Rohrwandung (7) anliegt, um den Deckel (15) seitlich relativ zum Rohrabschnitt(3) zu lagern.

8. Durchflußsensormodulsystem nach einem der Ansprüche 4 bis 7, **dadurch gekennzeichnet, daß** die Innenseite des Deckels (15) der Form des Schaufelrads (11) teilweise angepaßt ist.

9. Durchflußsensormodulsystem nach Anspruch 1 oder 2, **dadurch gekennzeichnet, daß** an der Rohrwandung (7) ein seitlich abstehender und hohler Fortsatz (9) zur Aufnahme des Schaufelrads (11) in seinem Inneren angeformt ist und eine oder ein Teil der Seitenwand des Fortsatzes (9) als abnehmbarer Deckel (29) ausgebildet ist, in dem ein Ende der Drehachse (19) des Schaufelrads (11) gelagert ist, und daß das gegenüberliegende Ende der Drehachse (19) in einer Ausnehmung auf der Innenseite der restlichenSeitenwand aufgenommen ist.

10. Durchflußsensormodulsystem nach Anspruch 9, **dadurch gekennzeichnet, daß** der Fortsatz (9) quaderförmig ausgebildet ist, daß eine sich parallel zur Rohrmittelachse erstreckende Seitenwand des Fortsatzes (9) als Deckel (29) ausgebildet ist, in dem ein Ende der Drehachse (19) des Schaufelrades (11) gelagert ist, und daß das andere Ende in einer Ausnehmung in der dem Deckel (29) gegenüberliegenden Seitenwand (31) aufgenommen ist.

## Claims

1. A flow sensor module system comprising straight tube sections (3) which have different inside diameters and each include an associated flow sensor to measure the flow in the associated conduit, a paddlewheel (11) which projects into the associated flow and can be caused to rotate by means of the flow, the paddlewheel (11) generating an electrical measurement signal in a transducer outside the associated conduit and being integrated in the associated straight tube section (3), and part of the lateral tube wall (7) of the tube section (3) being configured as a removable cover (15; 29) in which the paddlewheel (11) is mounted at least on one side and which allows the paddlewheel (11) to be dismounted, the covers (15; 29) of the tube sections which have different inside diameters being of equal dimensions.

2. The flow sensor module system according to claim 1, **characterized in that** a permanent magnet (13) is integrated in the paddlewheel (11) and that mounted on the outside of the tube wall (7) is a housing (25) in which the transducer in the form of a Hall sensor or an inductive sensor is arranged.

3. The flow sensor module system according to claim 1 or 2, **characterized in that** a cuboidal, laterally projecting, hollow extension (9) for receiving the paddlewheel (11) in its interior is integrally moulded with the tube wall (7).

4. The flow sensor module system according to claims 2 and 3, **characterized in that** the interior of the extension (9) is separated from the housing (25) by the cover (15).

5. The flow sensor module system according to claim 4, **characterized in that** the face of the extension (9) facing radially outwards in relation to the centreline of the tube forms the removable cover (15), a pair of bearing flanges (17) which extend parallel to the centreline of the tube and are integrally moulded with the cover (15) projecting from the inside of the cover (15), for mounting the ends of the hinge pin (19) of the paddlewheel (11) extending between them.

6. The flow sensor module system according to claim 5, **characterized in that** the paddlewheel (11), along with its hinge pin (19) and with sliding bearings (21) provided at the ends thereof, constitutes a preassembled unit for the assembly of which the sliding bearings (21) are inserted into associated longitudinal slots in the bearing flanges (17).

7. The flow sensor module system according to claim 5 or 6, **characterized in that** the outside of each bearing flange (17) rests against a respective flat fitting surface (23) of the tube wall (7) to mount the cover (15) laterally in relation to the tube section (3).

8. The flow sensor module system according to any of claims 4 to 7, **characterized in that** the inside of the cover (15) is partly adapted to the shape of the paddlewheel (11).

9. The flow sensor module system according to claim 1 or 2, **characterized in that** a laterally projecting, hollow extension (9) for receiving the paddlewheel (11) in its interior is integrally moulded with the tube wall (7) and a side wall or part of the side wall of the extension (9) is configured as a removable cover (29) in which one end of the hinge pin (19) of the paddlewheel (11) is mounted, and that the opposite end of the hinge pin (19) is received in a recess on the inside of the remaining side wall.

10. The flow sensor module system according to claim 9, **characterized in that** the extension (9) is designed to have a cuboidal shape, that a side wall of the extension (9) extending parallel to the centreline of the tube is configured as a cover (29) in which one end of the hinge pin (19) of the paddlewheel (11) is mounted, and that the other end is received in a recess in the side wall (31) opposite the cover (29).

11. The flow sensor module system according to any of the preceding claims, **characterized in that** the covers (29) which are of equal dimensions and are used with tubes having different diameters are provided with paddlewheels (11) having equal dimensions.

## Revendications

1. Système modulaire de capteur de débit, comportant des tronçons de tube (3) droits qui ont différents diamètres intérieurs et qui présentent chacun un capteur de débit associé pour mesurer le flux dans la conduite tubulaire associée, comportant une roue à aubes (11) faisant saillie dans le flux associé et par lequel elle peut être mise en rotation, laquelle engendre un signal de mesure électrique dans un transducteur en dehors de la conduite tubulaire associée, la roue à aubes (11) étant intégrée dans le tronçon tubulaire (3) droit associé, et une partie de la paroi tubulaire (7) latérale du tronçon tubulaire (3) étant réalisée sous forme de couvercle (15 ; 29) amovible dans lequel la roue à aubes (11) est montée au moins sur un côté et qui permet de démonter la roue à aubes (11), les couvercles (15 ; 29) des tronçons tubulaires, qui présentent différents diamètres intérieurs, ayant les mêmes dimensions.

2. Système modulaire de capteur de débit selon la revendication 1, **caractérisé en ce que** dans la roue à aubes (11) est intégré un aimant permanent (13), et **en ce que** sur la face extérieure de la paroi tubulaire (7) est montée un boîtier (25) dans lequel le transducteur est agencé sous la forme d'un capteur de Hall ou d'un capteur inductif.

3. Système modulaire de capteur de débit selon la revendication 1 ou 2, **caractérisé en ce que** sur la paroi tubulaire (7) est conformé un prolongement (9) en forme de parallélépipède, faisant saillie latéralement et creux pour recevoir la roue à aubes (11) à l'intérieur de celui-ci.

4. Système modulaire de capteur de débit selon les revendications 2 et 3, **caractérisé en ce que** l'intérieur du prolongement (9) est séparé du boîtier (25) par le couvercle (15).

5. Système modulaire de capteur de débit selon la revendication 4, **caractérisé en ce que** le côté du prolongement (9), tourné radialement vers l'extérieur par rapport à l'axe médian de tube forme le couvercle (15) amovible, deux brides de palier (17) conformées sur le couvercle (15) et s'étendant parallèlement à l'axe médian de tube, faisant saillie depuis la face intérieure du couvercle (15) pour monter les extrémités de l'axe de rotation (19) de la roue à aubes (11) s'étendant entre celles-ci.

6. Système modulaire de capteur de débit selon la revendication 5, **caractérisé en ce que** la roue à aubes (11) forme avec son axe de rotation (19) et avec des paliers coulissants prévus à ses extrémités une unité préalablement montée pour le montage de laquelle les paliers coulissants (21) sont introduits dans des fentes longitudinales dans les brides de palier (17).

7. Système modulaire de capteur de débit selon la revendication 5 ou 6, **caractérisé en ce que** la face extérieure de chaque bride de palier (17) est en appui sur une surface d'ajustage (23) plane respective de la paroi tubulaire (7) pour monter le couvercle (15) latéralement par rapport au tronçon tubulaire (3).

8. Système modulaire de capteur de débit selon l'une des revendications 4 à 7, **caractérisé en ce que** la face intérieure du couvercle (15) est partiellement adaptée à la forme de la roue à aubes (11).

9. Système modulaire de capteur de débit selon la revendication 1 ou 2, **caractérisé en ce que** sur la paroi tubulaire (7) est conformé un prolongement (9) faisant saillie latéralement et creux pour recevoir la roue à aubes (11) à l'intérieur de celui-ci et une paroi latérale du prolongement (9) ou une partie de celle-ci est réalisée sous forme de couvercle (29) amovible dans lequel est montée une extrémité de l'axe de rotation (19) de la roue à aubes (11), et **en ce que** l'extrémité opposée de l'axe de rotation (19) est reçue dans un évidement sur la face intérieure du reste de la paroi latérale.

10. Système modulaire de capteur de débit selon la revendication 9, **caractérisé en ce que** le prolongement (9) est réalisé sous forme de parallélépipède, **en ce qu'**une paroi latérale du prolongement (9), qui s'étend parallèlement à l'axe médian du tube, est réalisée sous forme de couvercle (29) dans lequel est montée une extrémité de l'axe de rotation (19) de la roue à aubes (11), et **en ce que** l'autre extrémité est reçue dans un évidement dans la paroi latérale (31) opposée au couvercle (29).

11. Système modulaire de capteur de débit selon l'une des revendications précédentes, **caractérisé en ce que** les couvercles (29) de mêmes dimensions, utilisés pour des tubes présentant différents diamètres, sont pourvus de roues à aubes (11) de mêmes dimensions.
